# EUROPEAN PATENT SPECIFICATION

(11) **EP 2 449 020 B1**
(45) Date of publication and mention of the grant of the patent: **03.04.2013**
(21) Application number: 10726177.8
(22) Date of filing: 07.06.2010
(51) Int. Cl.: C08K 7/28, C08L 83/04

(54) **SILICONE RUBBER COMPOSITIONS**
SILIKONGUMMIZUSAMMENSETZUNG
COMPOSITION DE CAOUTCHOUC EN SILICONE

(30) Priority: 05.06.2009 US 184377 P
(43) Date of publication of application: 09.05.2012
(73) Proprietor: Meggitt Aerospace Limited, Shepshed Loughborough Leicestershire LE12 9EQ (GB); Meggitt-Oregon, Inc., McMinnville, Oregon 97128 (US)
(72) Inventor: SYKES, David, Coalville Leicestershire LE67 5BT (GB); LY, Kim Loan Thi, Monmouth Oregon 97361 (US)
(74) Representative: Samuels, Lucy Alice
(86) International application number: PCT/GB2010/050954
(87) International publication number: WO 2010/140009

(56) References cited:
- EP-A1- 0 722 989
- WO-A1-2008/154327
- US-A- 4 273 697
- US-A- 5 981 610
- US-A1- 2004 132 890
- US-B1- 6 261 214

## Description

### Field of the Invention

The present invention relates to silicone rubber compositions, methods for their preparation and uses thereof. In particular, the invention relates to silicone rubber compositions for use in transport, in particular in the aerospace industry.

### Background to the Invention

Silicone elastomers are commonly classified into three main groups of materials: i) room temperature vulcanizing (RTV) elastomers; ii) high consistency rubbers (HCR); and iii) liquid silicone rubbers (LSR). RTV systems are designed to cure at room temperature and HCR systems are designed to cure at temperatures above 100°C. HCR rubbers generally have a very high viscosity in the uncured state. Liquid silicone rubbers (LSR) are so-named because of their low viscosity and paste-like nature in the uncured state. LSR systems are similar to HCR systems in that they are designed to vulcanize at high temperatures. One of the differences between RTV, HCR and LSR elastomers is the molecular mass of the raw materials. Similar amounts of fillers are used in general. The primary distinction, however, is in how the elastomers have to be processed, as a result of their differing physical properties.

High performance seals are widely used in the aerospace, automobile, marine and oil and gas industries. Aircraft applications in particular represent one of the most demanding sealing environments, with the ultimate in safety-critical requirements. Air frame seals must withstand extremes of temperature and pressure in areas where they are often exposed to high humidity and ozone, friction, high frequency vibration, potentially aggressive chemicals, lubricants and media contamination (e.g. hydraulic fluids, de-icing fluids etc). Airframe seals are used throughout the aircraft body, on wings, windows and doors where they contribute to the aerodynamic efficiency.

The aerospace industry in particular, but also the marine, automobile and oil and gas industries, is tightly regulated and any high performance seals used in these industries must have the physical properties defined in exacting product specifications.

Additionally, if a base material is to be used for the manufacture of a seal, such as an airframe seal, it must have the physical properties which allow it to be processed into the required form. Airframe seals in particular can be of large dimensions. Typical manufacturing processes used during the manufacture of a high performance airframe seal are calendering and extrusion. It is important that a composition which is to be used for the commercially viable production of such a seal is capable of being processed using the conventionally used rubber processing equipment, e.g. calendering and extrusion equipment.

It is known to use HCR silicone elastomers for the formation of airframe seals and in general these elastomers are suitable for use in this conventional rubber processing equipment.

US 2004/0132890 A1 describes a low specific gravity liquid silicone rubber composition which comprises liquid diorganosiloxane, hydrophobic reinforcement filler, curing agent, hollow resin particles and water. The composition forms a low specific gravity silicone rubber with excellent stability of dimensions in the case of heating and cooling, and the composition is suitable for manufacturing articles such as gaskets used in automobiles and aircraft devices. The hollow resin particles are the essential component for reducing the weight of the silicone rubber composition. The cured rubber is a low viscosity liquid silicone rubber would not be suitable for the production of airframe seals. The LSR cannot be used in the conventional rubber processing equipment used to make airframe seals.

EP 0 722 999 describes curable organosiloxane compositions for production of abradable seals for turbine-type compressors on aircraft. The compositions comprise a curable polyorganosiloxane, an organohydrogen siloxane, a curing catalyst from metals or compounds of the platinum group and a microsphere reinforcing agent of a particular density to impart machinability and erosion resistance. The curable organosiloxane composition is applied as a protective coating to the inner wall housing of a turbine compressor. The curable organosiloxane composition is necessarily a liquid silicone rubber (LSR) to be applied as a coating. The cured rubber is a low viscosity liquid silicone rubber that is not suitable for the production of airframe seals. The LSR cannot be used in the conventional rubber processing equipment used to make airframe seals.

US Patent No. 6,261,214 discloses a non-foamable silicone rubber composition in a heat-fixing roll comprising 100 parts by weight of a thermosetting organopolysiloxane composition and 0.1 to 200 parts by weight of a non-expandable hollow filler having a mean particle size of up to 200µm, wherein the hollow filler has a true specific gravity of up to 0.5. The organopolysiloxane is preferably a liquid at room temperature and all of the examples disclose a liquid silicone rubber (LSR). The cured rubber is a low viscosity liquid silicone rubber that is not suitable for the production of airframe seals. The LSR cannot be used in the conventional rubber processing equipment used to make airframe seals.

US Patent No. 5,981,610 describes a thixotropic liquid silicone rubber composition for injection moulding, comprising an organopolysiloxane, an organohydrogenpolysiloxane, a thixotropic agent, an addition reaction catalyst; and a fine hollow filler (i.e. a micro balloon) having a specific gravity of 0.01 to 0.40 and a mean particle size of up to 300µm. The fine hollow filler is effective for reducing the weight of a cured part by introducing gaseous cells. The cured rubber is a low viscosity liquid silicone rubber that is not suitable for the production of airframe seals. The LSR cannot be used in the conventional rubber processing equipment used to make airframe seals.

U.S. Patent No. 5,262,454 discloses a flame-resistant, curable polyorganosiloxane compound having a content of 2 to 40 weight % hollow glass balls with an outside diameter of up to 200µm and 3 to 50 weight % of an inorganic intumescent compound which expands at a temperature from 80° to 250°C. It is disclosed that the incorporation of the hollow glass balls in the polyorganosiloxane has a desirable reduction in density and thermal conductivity of the compound. However, the cured compound is stated to be suitable for use in the field of plumbing and building, as well as in the manufacture of windows. There is no indication that the cured compound possesses the properties that would make it suitable for use in an airframe seal, i.e. required hardness and service temperature range.

### Summary of Invention

In the aerospace industry, the performance of the jet engine used in such aircraft has been optimised to such an extent that it has become quite difficult to further improve the fuel economy of the jet engine. Aircraft manufacturers are now looking at other methods to improve the fuel economy of aircraft, one such method being by reducing the weight of the aircraft. It is estimated that over $10,000.00 USD are saved in fuel costs over the life of the aircraft for every kilogram reduction in weight of the aircraft. This has involved the development and use of lighter materials for the construction of the main body fuselage, wings and tail of the aircraft. One area in which there is scope for weight savings is the amount of rubber in a typical commercial aircraft. There are over 600 kg of rubber, including the tyres, in a typical commercial passenger aircraft such as a Boeing 747 or an Airbus 380.

The inventors have addressed the problem of providing seals, especially airframe seals, which have significantly reduced density in comparison with known aerospace seals, in order to further improve fuel economy, but at the same time achieving the stringent physical properties and performance requirements which are necessary for such seals, in particular those defined in the exacting product specifications required by aircraft manufacturers.

This has proven to be no easy matter. The inventors have found that in order to achieve this objective it is necessary to select the base composition for use in formation of the seal very carefully. In order to provide a composition which is physically capable of being processed in standard equipment for production of airframe seals and at the same time provide the physical properties required for the end product seal and, further, to provide a significantly reduced density, it is important to choose a defined amount of a hollow filler and a particular class of silicone elastomers for the rubber base.

Accordingly, according to the invention there is provided a heat curable silicone rubber composition (compound) comprising:
100 parts by weight of an uncured HCR silicone elastomer base which has, when determined in its cured state, a tensile strength of at least 8 MPa, a tear strength at least 18 N/mm, and a specific gravity of between 1.05 and 1.35 g/cc;
0.5 to 30 parts by weight of a hollow filler;
0.1 to 3.0 parts by weight of a curing agent.

The following terminology is used throughout the rest of the specification and should be interpreted as follows:
"elastomer base" refers to the elastomer base in its uncured state without any fillers (e.g. hollow glass balls) or additives
"cured elastomer base" refers to the elastomer base in its cured state without any fillers (e.g. hollow glass balls) or additives
"cured rubber compound" refers to the elastomer base in its cured state with fillers (e.g. hollow glass balls) and, if present, any other additives in the composition; that is, the cured base corporation

The term "silicone elastomer" should be interpreted to mean one single silicone elastomer or a combination of silicone elastomers provided that the combination of silicone elastomers amounts to an overall total of 100 parts by weight and has the defined properties.

Silicone rubber based aircraft seals are manufactured to satisfy specific product specifications. These product specifications define the physical properties of the constituent materials used to make the seal, including fabric reinforcements and the cured rubber. The physical properties defined in a typical rubber specification include but are not limited to: density; hardness; tensile strength; elongation at break; compression set for 24 hours; tear strength; fluid resistance; and resistance to heat ageing.

The list/use of traditional silicone-compatible compounding ingredients is well documented. Until now the density of a typical fully compounded silicone rubber grade used in the production of an aircraft seal would, dependent on the hardness required, fall in the range 1.1 to 1.35.

The inventors of the present invention have recognised that it is possible to achieve a desirable combination of low density and the physical properties required for the final seal, as well as providing a composition that can be processed in standard equipment, by selecting as the base elastomer an a HCR silicone elastomer having a tensile strength of at least 8 MPa, a tear strength of at least 18 N/mm and a density of between 1.05 and 1.35 g/cc when in its cured state, and selecting 0.5 to 30 parts hollow filler.

The incorporation of hollow fillers into the silicone elastomer has the effect of reduction of the density of the silicone elastomer. The hollow fillers create voids in the silicone elastomer, which, when cured, contribute to a reduction in the weight and consequently the density of the cured product. The density of the cured rubber is preferably less than 1 g/cc.

An advantage of the composition of the invention is that the density of the cured seal material can be reduced to less than 1 g/cc (by utilising hollow fillers having a density between 0.15 and 0.45) but the rubber composition can also meet all of the physical property requirements of the aircraft manufacturers' stringent product specifications.

The time limit between vulcanization and testing is in accordance with ISO 471, which is incorporated herein by reference. The tensile strength of the cured elastomer base is determined in accordance with ISO 37 Type 2, which is incorporated herein by reference. The tear strength of the cured elastomer base is determined in accordance with ISO 34-1 Method C, which is incorporated herein by reference. The density of the cured elastomer base is determined in accordance with ISO 2781, which is incorporated herein by reference. The elongation at break of the cured elastomer base is determined according to ISO37 Type 2. The curing agent that is used to cure the silicone elastomer for the purposes of determining its properties in the cured state is the curing agent used in the silicone rubber compound (composition) itself. Curing conditions are thus chosen appropriately according to the curing agent, to obtain a fully cured elastomer base. Exemplary curing conditions that can be used are: 10 minutes press cure at 170°C, followed by post cure for 4 hours at 200°C.

Preferably, the HCR silicone elastomer has a hardness of between 30 and 80 IRHD when in its cured state. The hardness is determined in accordance with ISO 48 Method N, which is incorporated herein by reference. The hardness is preferably, however, not more than 70, in particular not more than 60. This especially useful when it is desired to provide a final cured rubber composition having density of less than 1 g/cc.

The silicone elastomer is generally an HCR polyorganosiloxane-based silicone rubber base. More preferably, the HCR polyorganosiloxane-based silicone rubber base is a polydimethyl siloxane containing crosslinking groups having hydroxyl, vinyl or hexenyl groups. Alternatively it may be a phenyl substituted poly dimethyl siloxane (polydimethylphenyl siloxane). Phenyl substituted dimethyl siloxanes can give superior low temperature properties in comparison with unsubstituted polydimethyl siloxanes. Even more preferably, the polydimethyl or polydimethylphenyl siloxane rubber base is terminally blocked with hydroxyl, vinyl or hexenyl groups.

Suitable HCR silicone rubber bases include: Silastic 35U^{®} (a dimethyl vinyl terminated, dimethyl organosiloxane sold by Dow Corning), which has typical properties as follows: a hardness of 33 IRHD, a tensile strength of 9.4 MPa, a tear strength of 22 N/mm, an elongation at break of 894 % and a specific gravity of 1.13. The hardness, tear strength, tensile strength, elongation at break and specific gravity of this elastomer base are determined in accordance with the ISO methods mentioned above.

Silastic TR-55^{®} (a dimethyl vinyl terminated, dimethyl organosiloxane sold by Dow Corning), which has typical properties as follows: a hardness of 55 Shore A (ASTM D-2240), a tensile strength of 1450 psi, a tear strength of 275 ppi, an elongation at break of 775% and a specific gravity of 1.15. The Shore A hardness, tear strength, tensile strength, elongation at break and specific gravity of this silicone elastomer base are determined in accordance with relevant ASTM methods of testing rubber materials.

In an embodiment of the invention, the hollow filler is selected from the group consisting of glass balls, silica balloons, carbon balloons, phenol resin balloons, vinylidene chloride resin balloons, resin balloons composed of a vinylidene chloride-(meth) acrylonitrile copolymer, alumina balloons, zirconia balloons and shirasu (white sand) balloons or a mixture thereof.

Preferably, the hollow filler is hollow glass balls. The hollow glass balls preferably have a specific gravity of from 0.15 to 0.45.

The hollow glass balls are thin-walled but are strong enough such that they are not easily crushed during the manufacture and processing of the curable silicone rubber composition. If the density of the hollow glass balls is less than 0.15 g/cc, a high percentage of breakage may result. If the density of the hollow glass spheres is greater than 0.45 g/cc a higher volume must be added in order to achieve a like-for-like weight saving benefit and would result in an inferior set of physical properties for the resultant material.

In addition, the external diameter of at least 90% by weight of the hollow glass balls is generally not more than 50 microns. If the average diameter of the hollow glass balls is greater than 50 microns, the possibility of the hollow glass balls being crushed during the manufacturing process is greatly increased. In a preferred embodiment, 90% of the balls by weight have an external diameter of not more than 43 microns, 50% by weight of the balls have an external diameter of not more than 31 microns and 10% by weight of the balls have an external diameter of not more than 20 microns.

In general, a smaller diameter leads to increased processability, namely lower risk of breakage during the manufacturing process. In addition, a greater number of small glass balls improve the dissipation of stress within the rubber. Preferably then the external diameter of the hollow glass balls is not more than 40 microns. However, for practical purposes the external diameter is usually at least 10 microns, for instance at least 15 microns. In these cases as well, the value refers to the fact that at least 90% of the balls, by weight, have a diameter not more than the specified value.

The size distribution may be measured by a variety of methods known to the person skilled in the art including, sieve analysis, photoanalysis and laser diffraction. The preferred method of analysis is laser diffraction.

The glass balls are not necessarily exactly geometrically spherical, but are usually substantially spherical.

In one embodiment of the curable silicone composition according to the invention, the hollow glass balls comprise 97 to 100 wt% of soda lime borosilicate glass and 0 to 3 wt% of synthetic crystalline-free silica gel.

Preferably, the curable silicone composition comprises 4 to 6 parts by weight of hollow glass balls.

In an alternative preferred embodiment, the curable silicone composition comprises 15 to 25 parts by weight of hollow glass spheres.

The proportion of glass balls used will be determined by the final properties required in the cured rubber, and by the precise characteristics of the glass balls themselves and of the silicone elastomer.

In a further preferred embodiment, the curing agent is an organic peroxide curing agent selected from the group consisting of 2,5-dimethyl-2,5-di-(tert-butylperoxy)hexane, di-tert-butyl peroxide, 2,4-dichlorobenzoyl peroxide, benzoyl peroxide, dicumyl peroxide, tert-butyl perbenzoate, tert-butylperoxy and isopropyl carbonate or any combination thereof.

Organic peroxide curing agents such as those set out above have been found to be particularly effective in heat curing the silicone rubber composition according to the invention.

The curing agent can be chosen depending upon the intended process of production of the final seal and the other components of the seal. For instance, fabric-reinforced seals can include various types of fabric and it is important to choose a curing agent whose curing temperature is compatible with the fabric used. For instance, a polyester fabric could not be subjected to temperatures above 170°C without degradation of physical properties. The skilled person can also choose a curing agent in order to influence other properties, for instance compression set or heat resistance, of the final product cured rubber composition and the seal.

The curing agent selected must be temperature activated and must confer heat stability to the composition during the curing process and to the cured product. The curing agent selected will depend on the HCR silicone elastomer selected as a base material. The length of time of the cure and the temperature of the cure depend on the curing agent selected. Typically, the cure time will range from 5 to 30 minutes at a temperature of from 100 to 200°C depending on the curing agent selected. For example, the curing agent 2,5-dimethyl-2,5-di-(tert-butylperoxy)hexane has an activation temperature of 165 °C. The cure temperature selected for this curing agent is generally 170 °C. The cure time will depend on the HCR silicone elastomer selected. The curing agent 2,4-dichlorobenzoyl peroxide has an activation temperature of 100 °C. The cure temperature selected for this curing agent is generally 110 °C. The cure time will depend on the HCR silicone elastomer selected.

Preferably, the organic peroxide curing agent is 2,5-dimethyl-2,5-di-(tert-butylperoxy)hexane or a combination of 2,5-dimethyl-2,5-di-(tert-butylperoxy)hexane and di-tert-butyl peroxide.

Preferably, the heat curable silicone rubber composition comprises 0.3 to 0.6 parts by weight of the organic peroxide catalyst.

There are a number of additional components that may optionally be added to the silicone rubber composition according to the invention. Such components can be chosen by the skilled person in order to obtain the required properties of the cured rubber compound and, ultimately, the seal (commonly an airframe seal of which it forms a part).

In a preferred embodiment, the heat-curable silicone rubber composition according to the invention further comprises up to 1.5 parts by weight of an organosilane coupling agent.

Organosilane coupling agents - typically containing the general structure (RO)₃SiCH₂CH₂CH₂-X, where RO is a hydrolysable group, such as amino, methacryloxy, epoxy, etc. can be used. For example for the interaction of silicones and mineral fillers typical examples are alkoxysilanes. Examples are methacryloxypropyltrimethoxysilane, glycidoxypropyltrimethoxysilane, phenyltrimethoxysilane, isobutyltriethoxysilane and propyltrimethoxysilane.

The organosilane coupling agent must be compatible with the chosen silicone elastomer and the surface of the hollow glass balls. In this regard, it may be necessary to first coat the hollow glass balls with the organosilane coupling agent before incorporating the hollow glass balls into the silicone elastomer. The organosilane coupling agent increases the tensile strength and tear strength of the cured silicone rubber composition. However, its use can reduce the elongation at break in the cured silicone rubber. In this case other additives can be used to offset this decrease.

Preferably, the organosilane coupling agent is 3-methacryloxypropyltrimethoxysilane.

Further preferably, the silicone rubber composition according to the invention comprises 0.08 to 0.12 parts by weight of the organosilane coupling agent.

In a preferred embodiment, the silicone rubber composition further comprises up to 3 parts by weight of a tensile strength modifier.

Preferably, the tensile strength modifier is a polyorganosiloxane additive or a reinforcing filler.

Further preferably, the reinforcing filler is fumed silica or acetylene carbon black.

Further preferably, the heat curable silicone rubber composition according to the invention comprises 0.7 to 1.4 parts by weight of the tensile strength modifier.

A tensile strength modifier is added to the silicone rubber composition according to the invention in order to increase the tensile strength of the heat cured product. A scenario may arise where in attempting to maximise the weight savings associated with a reduced density, the cured rubber will meet the hardness requirement of a product specification but may not meet the tensile strength requirement of the product specification.

The deficiency may be remedied by using an additive in the composition. If the tensile strength is not at the required level, then addition of a tensile strength modifier may remedy the problem.

High tear strength HCR silicone rubbers tend to have a reduced heat resistance in comparison to general purpose HTV silicone rubbers. Consequently, they would not have been expected, prior to the invention, to be preferred for general use in aircraft seals. However, the inventors have recognised their beneficial properties for use in this application, especially airframe seals, in combination with hollow filters. Accordingly, they are used in the invention and in a preferred embodiment the composition according to the invention further comprises up to 5 parts by weight of a heat stabilising additive. The heat stabilizing additive is added to confer heat stabilizing properties on the composition during the subsequent curing process and on the cured product.

In a further embodiment of the heat curable silicone composition according to the invention, the heat stabilizing additive is selected from the group consisting of hydrophilic fumed titanium dioxide and ferric based compositions.

Metal based oxides of polyvalent elements are typically utilised as heat stabilisers of silicone elastomers. Examples of commonly used additives include stannic oxide and titanium dioxide, ferric based heat stabilisers (e.g., red iron oxide or ferric (III) octanoate) and carbon black may also be utilised. Barium zirconate is also used as a stabiliser.

Preferably, the heating stabilizing additive is hydrophilic fumed titanium dioxide.

Further preferably, the silicone rubber composition according to the invention comprises 1.8 to 2.3 parts by weight of the heat stabilizing additive.

In a preferred embodiment, the composition according to the invention further comprises up to 5 parts by weight of a pigment dispersion.

In a further embodiment of the heat curable silicone composition according to the invention, the pigment dispersion comprises one or more inorganic pigments dispersed in a silicone gum, the inorganic pigments being typically iron oxide based. Generally pigments are supplied as a master batch where the required colour/shades are derived through mixtures/blends of pigments. These pigments are supplied dispersed in a soft silicone gum for ease of incorporation/processing in to the silicone compound itself.

In a still further embodiment of the heat curable silicone composition according to the invention, the pigment dispersion comprises one or more organic pigments dispersed in a silicone gum, the organic pigments preferably being selected from carbon based derivatives. Generally organic pigments are, like inorganic pigments, supplied as a master batch as above. Acetylene black is the most preferred carbon black used in silicone based compositions as this does not tend to have any detrimental effect on the curing system or the final characteristics of the materials.

Both the inorganic and organic pigment dispersions are added to the silicone rubber composition according to the invention in order to obtain a desired colour in the final cured product. Usually a light/dark grey colouration is obtained.

Preferably, the heat curable silicone rubber composition according to the invention comprises 0.30 to 0.70 parts by weight of the pigment dispersion to impart a final desired colour, often light grey.

In further preferred embodiments, the composition also contains up to 10 parts by weight, of other processing additives. The choice of these depends upon the property required. They can include extending fillers such as ground quartz, diatomaceous earth, calcium carbonate and titanium dioxide; reinforcing fillers as discussed above in connection with tensile strength modification or, most preferably, polytetrafluoroethylene (PTFE). High tear strength HCR silicone elastomers tend to be quite "sticky" in nature. The use of a processing additive like PTFE prevents the pre-cured silicone rubber composition from adhering to the walls of the vessel in which it is mixed. It also provides green strength to the uncured compound, which aids processing/handling. Processing additives such as ground quartz and diatomaceous earth improve the flow characteristics of the mixture.

Further preferably, the heat curable silicone rubber composition according to the invention comprises 0.2 to 0.4 parts by weight of the process additive.

One major advantage of the silicone rubber compound of the invention is that it is capable of being processed in the same manner as known silicone based rubber compounds for use in production of seals such as airframe seals. Thus, the methods of preparing the silicone composition/compound itself can be generally conventional (with the addition of steps for the inclusion of the hollow filler). Additionally, and of particular advantage, is the fact that the method of processing the compound to form the final seal can be conventional.

Thus, there is also provided a method of preparing the heat curable silicone composition according to the invention, said method comprising the steps of:
a) Adding the silicone elastomer to a mixing chamber and mixing the silicone elastomer until the elastomer is suitably homogenised;
b) Optionally adding and mixing one or more heat stabilizing additives, organosilane coupling agent, pigment dispersion, tensile strength modifier, processing additive into the silicone elastomer in the mixing chamber;
c) Adding and mixing the hollow filler into the silicone elastomer based mixture in the mixing chamber;
d) Removing the mixture from the mixing chamber and blending the mixture to obtain a homogenous composition
wherein the peroxide curing agent is either added to the homogenised silicone elastomer with the pigment dispersion in step b) or is added to the mixture during blending in step d).

Preferably, the steps a) to c) of the method are performed in a closed mixing chamber preferably having Z-blade rotors.

These steps of the method are performed in a closed mixing chamber preferably having Z-blade rotors due to the risk of particulate emissions to the atmosphere that may result from the addition of lightweight glass balls if the steps were performed in a conventional open mill. The enclosed mixing process means that the component incorporation accuracy and resultant compound properties can be reliably reproduced between mixed batches, without component loss to the atmosphere or Local Exhaust Ventilation (LEV) systems.

Preferably, step d) comprises removing the mixture from the mixing chamber to a two roll mill whereupon the mixture is blended until visually homogenous in consistency.

In one embodiment of the method of preparing the heat curable silicone composition according to the invention, step c) comprises staged mixing. Thus a proportion of the volume of the hollow glass balls is added into the silicone elastomer in the mixing chamber and this is allowed to uniformly disperse before the remaining volume of balls are added. The first portion may constitute from 20 to 70% of the total volume of balls, e.g., from 30 to 60%, for instance about 50%.

The heat curable silicone rubber composition according to the invention is suitable for use in the preparation of a heat cured silicone rubber having a hardness of between 40 and 80 IRHD, a minimum tensile strength of between 4.0 and 7.0 MPa, a minimum tear strength of between 10 to 12 kN/m², and a density of preferably less than 1 g/cc.

The heat curable silicone rubber composition according to the invention is also suitable for use in the preparation of a heat cured silicone rubber having a hardness of between 48 and 58 IRHD, a tensile strength of at least 1050 psi, a tear strength of at least 140 lbs/inch and a density preferably of less than 1 g/cc.

These properties of the cured silicone rubber compound are determined according to the methods given above for the equivalent properties of the cured silicone elastomer base.

As discussed above, one of the major advantages of the silicone rubber compound of the invention is that it can be processed to form a seal, such as an airframe seal, using standard methods and equipment. Thus, the invention allows the provision of seals having the required final product properties and significantly reduced density without the need for provision of new processing equipment.

The heat cured silicone rubber based seal can take a variety of shapes and forms depending on the function of the cured product. The shaping and curing process may be any technique known in the art. The two most common techniques in the art are moulding and extrusion. Other standard methods can be used, including calendering. The compositions of the invention have the advantage that they can be used to form seals (often large, shaped seals) by conventional moulding methods. Rubber moulded products are manufactured in a mould to achieve the desired size and shape required. The curable rubber composition is usually placed into a heated mould and cured to obtain the required size and shape under pressure.

In this regard, there is provided a method of forming a silicone rubber seal, which method comprises the steps of:
a) Moulding the heat curable silicone rubber composition according to the invention to provide the shape of the seal; and
b) Heating the composition in the mould (preferably for a time of from 5 to 30 minutes at a temperature of from 100 to 200°C) in order to vulcanise the composition to a steady state elastomer.
Prior to the moulding step the rubber composition may be combined with a fabric material, in conventional manner for such seals. Extrusion and calendering may be used in the fabrication of the pre-moulded seals.

Preferably, the composition is heated in the mould for a time of from 5 to 30 minutes at a temperature of from 150 to 180°C in order to vulcanise the composition to a steady state elastomer.

The length of time of the cure and the temperature of the cure depend on the curing agent selected. For example, the curing agent 2,5-dimethyl-2,5-di-(tert-butylperoxy)hexane has an activation temperature of 165 °C. The cure temperature selected for this curing agent is generally 170 °C. The cure time will depend on the HCR silicone elastomer selected. The curing agent 2,4-dichlorobenzoyl peroxide has an activation temperature of 100 °C. The cure temperature selected for this curing agent is generally 110 °C. The cure time will depend on the HCR silicone elastomer selected. The cure time and temperature also depend on the geometry of the seal part being produced. In general the skilled person will select a cure time and temperature so as to produce a fully cured rubber.

In a preferred embodiment of the method of forming a silicone rubber seal, the composition undergoes post cure processing.

Preferably, the post cure processing comprises heating the composition for a time of from 3 to 24 hours at a temperature of from 150 to 250°C.

Even more preferably, the post cure processing comprises heating the composition for a time of from 3 to 5 hours at a temperature of from 195 - 230°C.

Even further preferably, the post cure processing is performed in a hot air circulating oven.

As is conventional, the final seal may be a fabric reinforced seal. Conventional fabrics include polyester, glass fibres, ceramic fibres and polyaramid. The silicone rubber compound is usually combined with or applied to the fabric during or before the moulding step (a) above. Evidently, the subsequent conditions for moulding and curing and any post curing steps will be chosen so as to be compatible with the fabric chosen. For instance, it will be understood that if the fabric is polyester then the processing conditions cannot be above a temperature in which that is degraded.

There is provided a silicone rubber seal obtainable by the above-described method, wherein the silicone rubber seal has a hardness of from 40 to 80 IRHD, a tensile strength of at least 4.0 MPa (preferably up to 7. MPa), a minimum tear strength of at least 10 kN/m2 (preferably up to 12kN/m2), and a density of less than 1 g/cc.

There is also provided a silicone rubber seal obtainable by the above-described method, wherein the silicone rubber seal has a hardness of between 48 and 58 IRHD, a minimum tensile strength of 1050 psi, a minimum tear strength of 140 lbs/inch and a density of less than 1 g/cc.

The cured product, such as a rubber seal, can be formed by extrusion. The process of extrusion involves processing a heat curable rubber composition through an extruder. There are two main components of rubber extruders: a) the barrel - where the material is softened/pressurized through rotation; and b) a die - the pressure pushes the rubber through the die located at the end of the extruder. The rubber emerges from the extruder in a profile which resembles the die shape. As the possibilities of the die design are almost limitless, so also are the number of possible extruded rubber profiles. After being extruded, depending on the incorporated curative system, the rubber material can be heat-cured using various methods such as an autoclave, hot air tunnels or placing in a mould. As mentioned above, the processing conditions depend upon, for instance, the curing agent chosen, and can be chosen appropriately by the skilled person.

### Detailed Description of the Invention

The aerospace, automobile, marine and oil and gas industries are tightly regulated and the components of silicone rubber based seals are subject to stringent product specifications and it is important that a curable silicone rubber composition can meet the product specification.

The HCR silicone elastomer that forms the base material of the silicone rubber composition has a tensile strength of at least 8 MPa, a tear strength at least 18 N/mm and a specific gravity of between 1.05 and 1.35 g/cc when in the cured state. Preferably, the HCR silicone elastomer has a hardness of 30-80 IRHD and an elongation at break of at least 500%.

The inventors of the present invention recognised that there is an inverse relationship between the amount of hollow filler added to the HCR silicone rubber base and each of the tensile strength, tear strength and elongation at break, respectively - as the amount of hollow filler increases, the tear strength of the cured product decreases, the tensile strength of the cured product decreases and the elongation at break of the cured product decreases.

This relationship between the amount of hollow glass balls added and the physical properties of the cured product is used to prepare a heat curable silicone rubber compound having a cured density of less than 1 g/cc but which also meets the desired physical properties recited in a product specification.

In the invention it is particularly preferred that the specific gravity of the HCR silicone elastomer base is not more than 1.20 g/cc in the cured state. Such elastomer bases are particularly advantageous because they allow the provision of a silicone rubber compound which in the cured state can give a density of less than 1 g/cc.

One important product specification requires that the cured rubber compound has the following physical properties: a hardness of at least 40 IRHD; a minimum tensile strength of 4.5 MPa; a minimum tear strength of 10 N/mm and an elongation at break of at least 250 %.

To prepare a seal that meets such a product specification, the first consideration is that is that the tensile strength and the tear strength will decrease as the amount of filler increases. The elongation at break will also decrease as the amount of hollow filler increases. Thus, the HCR silicone elastomer selected should have a tensile strength, a tear strength and an elongation at break that is more than the desired tensile strength, tear strength and elongation at break in the cured rubber. For the selected silicone rubber base, the tensile strength will decrease "x" MPa for every 1 part by weight of hollow glass balls, the tear strength will decrease "y" N/mm for every 1 part by weight of the hollow glass balls and the elongation at break will decrease "z" % for every 1 part by weight of the hollow glass balls.

The second consideration is that the hardness will increase as the amount of filler increases. The HCR silicone rubber base selected must have a hardness that is less than the desired hardness in the cured product. For the selected silicone rubber base, the hardness will increase "w" IRHD for every 1 part by weight of hollow glass balls.

The scenario may arise where the cured product will meet the hardness requirement but may not meet one or more of the tensile strength, tear strength or elongation at break requirements. In such a scenario, there are several options.

First of all, the deficiency may be remedied by using an additive in the composition. If the tensile strength is not at the required level, then addition of a tensile strength modifier may remedy the problem. If the tear strength is not at the required level, then addition of a coupling agent may remedy the problem, although care must be exercised in this regard as even though the tear strength will be increased by addition of a coupling agent additive, the elongation at break could be decreased. This can be remedied by the inclusion of further additives.

Alternatively, the properties of the HCR silicone elastomer can be modified by blending the rubber base with another HCR silicone elastomer that has similar properties with respect to hardness, tensile strength and elongation at break but has, for example, a higher tear strength. The blend of HCR silicone elastomers will have the required hardness, tensile strength, tear strength and elongation at break.

The curable silicone composition according to the invention is prepared by firstly adding the silicone elastomer to a mixing chamber and mixing the silicone elastomer until the elastomer is suitably homogenised. It has been found that the most efficient mixing chamber is a closed mixing chamber having a Z-blade mixer. However, any mixing chamber that is capable of homogenising the silicone elastomer and mixing the additional components may also be used.

One or more of the heat stabilizing additive, organosilane coupling agent, pigment dispersion, the tensile strength modifier and the process additive is added to the silicone elastomer in the mixing chamber. The hollow fillers are added to and mixed into the silicone elastomer based mixture in the mixing chamber. Thereafter, the mixture is removed from the mixing chamber and is blended in order to obtain a homogenous composition. The peroxide curative is typically either added to the homogenised silicone elastomer with the pigment dispersion or is added to the mixture during blending.

The hollow filler may also be added in a stepwise fashion, for instance, adding and mixing 50% of the volume of the hollow filler into the silicone elastomer in the mixing chamber followed by adding and mixing the remaining volume of hollow filler into the silicone elastomer.

The invention is illustrated by the following examples.

### Examples 1

The silicone rubber compound has the following composition (composition A):
100 parts by weight of the silicone elastomer S35U;
5.30 parts by weight of thin-walled, hollow, soda-lime borosilicate glass balls having a true density of 0.23g/cc (available as XLD3000 from 3M); and
2.10 parts by weight of hydrophilic fumed titanium dioxide heat stabilizing additive (available as Aeroxide TiO2 P25 from Evonik Degussa GmbH)
0.10 parts by weight of the organofunctional silane coupling agent 3-methacryloxypropyl-trimethoxysilane (available as Dynasylanmemo E from Degussa
0.80 parts by weight of the organic peroxide curative 2,5-dimethyl-2,5-di-(tert-butylperoxy) hexane (DHBP) (available as DHBP-45-IC2 from United Initiators).

The compound was produced as follows:
100 parts by weight of the silicone elastomer S35U (Silastic 35U - an uncatalysed, 35 nominal durometer, high strength polydimethylsiloxane rubber base marketed by Dow Corning) is added to a mixing chamber having a Z-blade mixer. The lid of the mixing chamber is closed and the mixer is started. The S35U elastomer is homogenised by mixing in the chamber for approximately two minutes.
0.80 parts by weight of the organic peroxide curative 2,5-dimethyl-2,5-di-(tert-butylperoxy) hexane (DHBP) is added and mixed into the silicone elastomer based mixture, together with 0.40 parts by weight of an inorganic pigment (dispersion of inorganic pigments in a silicone gum carrier available as PD90111 from Silicone Solutions).
0.10 parts by weight of the organofunctional silane coupling agent 3-methacryloxypropyltrimethoxysilane are added to 2.10 parts by weight of the heat stabilizing additive hydrophilic fumed titanium dioxide. This mixture is then added to the silicone elastomer based mixture and is mixed for approximately 3 to 4 minutes.
50% of the volume of thin-walled, hollow, glass spheres, soda-lime borosilicate glass balls having a true density of 0.23g/cc and an average diameter of 30 microns (available as XLD3000 from 3M) are added to the silicone elastomer based mixture and mixed for approximately 6 to 8 minutes. The remaining 50% of the hollow, glass spheres are added to the silicone elastomer and mixed for approximately 6 minutes. The mixture is removed from the mixing chamber and transferred to a two roll mill where the material is blended until thoroughly visually homogenous in consistency. Once the required consistency is achieved, the blend is removed from the mill.

The blend can be either stored indefinitely or can be transferred to a mould in order to produce a rubber seal. The blend is transferred to the mould in order to provide the shape of the seal and then heated in the mould for 10 minutes at a temperature of 170°C followed by 4 hours at a temperature of 200°C in order to vulcanise the blend to a steady state elastomer.

The following table illustrates the physical properties of the cured silicone rubber compound (test methods as per Table2). The compound was cured by heating for 10 minutes at a temperature of 170°C followed by 4 hours at 200°C or 225°C.as shown in the table.

The weight savings are calculated relative to a commercial product which meets an important product specification. This conventional HCR silicone rubber has a tensile strength of 7.3 MPa, a tear strength of 13.2 N/mm, a specific gravity of 1.18, a hardness of 54 IRHD, an elongation at break of 338%. The service temperature range is from -60 °C to 200 °C.

**Table 1**

| **TEST DETAILS** | **A** |
|---|---|
| Hardness (sheet) IRHD° | 48 |
| Tensile Strength MPa | 5.3 |
| Elongation @ Break % | 565 |
| Tear Strength (1.0mm nick) N/mm | 14.2 |
| Specific Gravity (sheet) ±0.05 | 0.98 |
| 24hrs @ 150 °C Comp. set % | 13.3 |

| **Dry Heat Resistance** | |
|---|---|
| After 336 hrs @ 200C:- | |
| Change in hardness IRHD | +6 |
| Change in tensile strength % | -15.3 |
| Change in elongation @ break % | -24.3 |
| **Post Cure detail** | 4/200° C |
| **% Weight saving** | 16.9 |

The following table illustrates the physical properties of the S35U silicone elastomer with the organic peroxide curative 2,5-dimethyl-2,5-di-(tert-butylperoxy) hexane (DHBP) (available as DHBP-45-IC2 by United Initiators). 100 parts by weight of the silicone elastomer is mixed with 0.8 parts by weight of the peroxide curative.

**Table 2**

| **TEST DETAILS** | **S35u** |
|---|---|
| Hardness (sheet) IRHD° | 33 (ISO 48 Method N) |
| Tensile Strength Mpa | 9.4 (ISO 37, Type 2 test pieces) |
| Elongation @ Break % | 894 (ISO 37, Type 2 test pieces) |
| Tear Strength (1.0mm nick) N/mm | 22.0 ISO 34-1 (Method C) |
| Specific Gravity (sheet) ±0.05 | 1.13 (ISO 2781) |
| 24hrs @ 150 °C Comp. set % | 10.8 (ISO 813-1 Type B test specimens Method A) |

| **Dry Heat Resistance** | |
|---|---|
| After 336 hrs @ 200C :- | |
| Change in hardness IRHD° | +5 (ISO 48 Method M) |
| Change in tensile strength % | -27.0 (ISO 37, Type 2 test pieces) |
| Change in elongation @ break | -45.1 (ISO 37, Type 2 test pieces) |

### Example 2

A composition is produced as described below.

62.8 parts by weight of the silicone elastomer TR-55 (Silastic TR-55 - an uncatalysed, 35 nominal durometer, high strength polydimethylsiloxane rubber base available from Dow Corning) and 37.2 parts by weight of the silicone elastomer Silastic 4-2903 (available from Dow Corning) are added to a mixing chamber having a Z-blade mixer. The lid of the mixing chamber is closed and the mixer is started. The TR-55 and Silastic 4-2903 elastomers are homogenised by mixing in the chamber for approximately two minutes.

1 part by weight of the silicone bound tensile modifier additive octamethylcyclotetrasiloxane (available as Silastic TM-1 modifier from Dow Corning), and a 0.057 parts by weight of the organic pigment Black MB dispersed in a silicone gum carrier (available as J Black 20 from Dow Corning) are added and mixed into the silicone elastomer mixture.

0.3 parts by weight of a PTFE powder processing additive (available as Teflon 6C from DuPont) is added to the mixture in the mixing chamber followed by 18.6 parts by weight of thin-walled, hollow, soda-lime borosilicate glass balls having a true density of 0.35g/cc (sold as S35 BY 3M) are then added and mixed into the silicone elastomer based mixture.

The mixture is removed from the mixing chamber and transferred to a two roll mill where 0.7 parts by weight of the organic peroxide curative 2,5-dimethyl-2,5-di-(tert-butylperoxy) hexane (DHBP) is incorporated into the material which is then blended until visually homogenous in consistency. Once the required consistency is achieved, the blend is removed from the mill.

The blend can be either stored indefinitely or can be transferred to a mould in order to produce a rubber seal. The blend is transferred to the mould in order to provide the shape of the seal and then heated in the mould for 10 minutes at a temperature of 170°C followed by 4 hours at 200°C in order to vulcanise the blend to a steady state elastomer.

## Claims

1. A heat curable silicone rubber composition comprising:
100 parts by weight of an uncured HCR silicone elastomer base which has, when determined in its cured state, a tensile strength of at least 8 MPa (ISO 37 Type 2), a tear strength at least 18 N/mm (ISO 34-1 method C), and a specific gravity of between 1.05 and 1.35 g/cc (ISO 2781);
0.5 to 30 parts by weight of a hollow filler;
0.1 to 3.0 parts by weight of a curing agent.

2. A composition according to claim 1, wherein the HCR silicone elastomer base has, in its cured state, a hardness (ISO 48 method N) of between 30 and 80 IRHD, preferably not more than 70 IRHD, more preferably not more than 60 IRHD.

3. A composition according to claim 1 or 2, wherein the HCR silicone elastomer base has, in its cured state, an elongation at break of at least 500% (ISO 37, Type 2 test pieces).

4. A composition according to any preceding claim, wherein the HCR silicone elastomer base is a polydimethyl or polydimethylphenyl siloxane containing crosslinking groups having hydroxyl, vinyl or hexenyl groups.

5. A composition according to any preceding claim, wherein the hollow filler is hollow glass balls and wherein the hollow glass balls have a specific gravity of from 0.15 to 0.45.

6. A composition according to any preceding claim, wherein the curing agent is an organic peroxide curing agent selected from the group consisting of 2,5-dimethyl-2,5-di-(tert-butylperoxy)hexane, di-tert-butyl peroxide, 2,4-dichlorobenzoyl peroxide, benzoyl peroxide, dicumyl peroxide, tert-butyl perbenzoate, tert-butylperoxy and isopropyl carbonate or any combination thereof.

7. A composition according to any preceding claim, further comprising up to 1.5 parts by weight of an organosilane coupling agent.

8. A composition according to any preceding claim, further comprising up to 3 parts by weight of a tensile strength modifier.

9. A composition according to any preceding claim, further comprising up to 5 parts by weight of a heat stabilizing additive.

10. A composition according to any preceding claim, further comprising up to 10 parts by weight of one or more processing additives.

11. A method of preparing the curable silicone composition according to any one of claims 1 to 10, said method comprising the steps of:
a) Adding the HCR silicone elastomer to a mixing chamber and mixing the elastomer until the elastomer is suitably homogenised;
b) Optionally adding and mixing one or more additives selected from the group consisting of heat stabilizing additives, organosilane coupling agents, pigment dispersions, tensile strength modifiers, and processing additives into the HCR silicone elastomer in the mixing chamber;
c) Adding and mixing the hollow filler into the HCR silicone elastomer in the mixing chamber;
d) Removing the mixture from the mixing chamber and blending the mixture to obtain a homogenous composition
wherein the curing agent is either added to the homogenised HCR silicone elastomer in step b) or is added to the mixture during the blending in step d).

12. A method according to claim 11, wherein step c) comprises adding and mixing from 30 to 70% of the volume of the hollow filler into the HCR silicone elastomer in the mixing chamber followed by adding and mixing the remaining volume of hollow fillers into the silicone elastomer in the mixing chamber.

13. Use of a composition according to any one of claims 1 to 10 in the preparation of a cured silicone rubber having a hardness of from 40 to 80 IRHD, a minimum tensile strength of between 4.0 and 7.0 MPa, a minimum tear strength of between 10 to 12 kN/m², and a density of less than 1 g/cc.

14. Use of a composition according to any one of claims 1 to 10 in the preparation of a cured silicone rubber having a Shore A hardness of between 48 and 58, a minimum tensile strength of 1050 psi, a minimum tear strength of 140 lbs/inch and a density of less than 1 g/cc.

15. A method of forming a silicone rubber based seal, which method comprises the steps of:
a) Moulding the curable silicone rubber composition according to any one of claims 1 to 10 to provide the shape of the seal; and
b) Heating the composition in order to cure the composition to an elastomeric state for formation of the rubber seal.

16. A method according to claim 15 in which the seal is an airframe seal.

17. A method according to claim 16 in which the seal is a fabric-reinforced airframe seal.

18. Use of a composition according to any of claims 1 to 10 in the production of an aircraft seal.

19. Use according to claim 18 in the production of an airframe seal.

20. Use according to claim 19 in the production of a fabric-reinforced airframe seal.

## Patentansprüche

1. Wärmehärtbare Silikongummizusammensetzung, umfassend:
100 Teile nach Gewicht von einer ungehärteten HCR-Silikonelastomerbasis, die, wenn in ihrem gehärteten Zustand ermittelt, eine Zugfestigkeit von mindestens 8 MPa (ISO 37 Typ 2), eine Reißfestigkeit von zumindest 18 N/mm (ISO 34-1 Methode c), und ein spezifisches Gewicht von zwischen 1,05 und 1,35 g/cc (ISO 2781) aufweist;
0,5 bis 30 Teile nach Gewicht eines hohlen Füllstoffs;
0,1 bis 3,0 Teile nach Gewicht eines Härtemittels.

2. Zusammensetzung nach Anspruch 1, wobei die HCR-Silikonelastomerbasis, in ihrem gehärteten Zustand, eine Härte (ISO 48 Methode N) von zwischen 30 und 80 IRHD, vorzugsweise nicht mehr als 70 IRHD, noch mehr bevorzugt nicht mehr als 60 IRHD aufweist.

3. Zusammensetzung nach Anspruch 1 oder 2, wobei die HCR-Silikonelastomerbasis, in ihrem gehärteten Zustand, eine Reißdehnung von zumindest 500 % (ISO 37, Typ 2 Prüfstücke).

4. Zusammensetzung nach einem beliebigen vorangehenden Anspruch, wobei die HCR-Silikonelastomerbasis ein Polydimethyl- oder Polydimethylphenylsiloxan, das Querverbindungsgruppen enthält, die Hydroxyl-, Vinyl- oder Hexenylgruppen aufweisen.

5. Zusammensetzung nach einem beliebigen vorangehenden Anspruch, wobei der hohle Füllstoff Glaskugeln ist und, wobei die hohlen Glaskugeln ein spezifisches Gewicht von 0,15 bis 0,45 aufweisen.

6. Zusammensetzung nach einem beliebigen vorangehenden Anspruch, wobei das Härtemittel ein organisches Peroxid-Härtemittel ist, das aus der Gruppe selektiert wurde, die aus 2,5-Dimethyl-2,5-di-(Tert-Butylperoxy)hexan, Di-tert-Butylperoxid, 2,4-Dichlorobenzoylperoxid, Benzoylperoxid, Dicumylperoxid, Tert-Butylperbenzoat, Tert-Butylperoxy- und Isopropylkarbonat oder irgendeiner Kombination davon besteht.

7. Zusammensetzung nach einem beliebigen vorangehenden Anspruch, die weiter bis zu 1,5 Teile nach Gewicht eines Organosilan-Kopplungsmittels umfasst.

8. Zusammensetzung nach einem beliebigen vorangehenden Anspruch, die weiter bis zu 3 Teile nach Gewicht eines Modifizierungsmittels für Zugfestigkeit umfasst.

9. Zusammensetzung nach einem beliebigen vorangehenden Anspruch, die weiter bis zu 5 Teile nach Gewicht eines Zusatzmittels für Wärmestabilisierung umfasst.

10. Zusammensetzung nach einem beliebigen vorangehenden Anspruch, die weiter bis zu 10 Teile nach Gewicht eines oder mehrere Verarbeitungszusatzmittel umfasst.

11. Verfahren zum Zubereiten der härtbaren Silikonzusammensetzung nach einem beliebigen der Ansprüche 1 bis 10, wobei das Verfahren folgende Schritte umfasst:
a) Hinzufügen des HCR-Silikonelastomers in eine Mischkammer und Mischen des Elastomers, bis das Elastomer angemessen homogenisiert ist;
b) Optionales Hinzufügen und Mischen eines oder mehrerer Zusatzmittel, die aus der Gruppe selektiert wurden, die aus Zusatzmitteln für Wärmestabilisierung, Organosilan-Kopplungsmitteln, Pigmentdispersionen, Modifizierungsmitteln für Zugfestigkeit besteht und Verarbeiten von Zusatzmitteln in das HCR-Silikonelastomer in der Mischkammer;
c) Hinzufügen und Mischen des hohlen Füllstoffs in das HCR-Silikonelastomer in der Mischkammer;
d) Entfernen der Mischung aus der Mischkammer und Vermischen der Mischung, um eine homogene Zusammensetzung zu erhalten,
wobei das Härtemittel entweder bei Schritt b) dem homogenisierten HCR-Silikonelastomer hinzugefügt wird oder der Mischung während der Vermischung bei Schritt d) hinzugefügt wird.

12. Verfahren nach Anspruch 11, wobei der Schritt c) das Hinzufügen und Mischen von 30 bis 70 % des Volumens des hohlen Füllstoffs in das HCR-Silikonelastomer in der Mischkammer gefolgt von Hinzufügen und Mischen des restlichen Volumens des hohlen Füllstoffs in das Silikonelastomer in der Mischkammer umfasst.

13. Verwendung einer Zusammensetzung nach einem beliebigen der Ansprüche 1 bis 10 bei der Zubereitung eines gehärteten Silikongummis mit einer Härte von 40 bis 80 IRHD, einer minimalen Zugfestigkeit von zwischen 4,0 und 7,0 MPa, einer minimalen Reißfestigkeit von zwischen 10 bis 12 kN/m², und einer Dichte von weniger als 1 g/cc.

14. Verwendung einer Zusammensetzung nach einem beliebigen der Ansprüche 1 bis 10 bei der Zubereitung eines gehärteten Silikongummis, der eine Shore A Härte von zwischen 48 und 58, eine minimale Zugfestigkeit von 1050 psi, eine minimale Reißfestigkeit von 140 lbs./Inch und eine Dichte von weniger als 1 g/cc aufweist.

15. Verfahren zum Formen einer Dichtung auf der Basis von Silikongummi, welches erfahren folgende Schritte umfasst:
a) Formpressen der härtbaren Silikongummizusammensetzung nach einem beliebigen der Ansprüche 1 bis 10, um die Form der Dichtung bereitzustellen; und
b) Erwärmen der Zusammensetzung, um die Zusammensetzung auf einen elastomeren Zustand zur Bildung der Gummidichtung zu härten.

16. Verfahren nach Anspruch 15, bei dem die Dichtung eine Flugwerkdichtung ist.

17. Verfahren nach Anspruch 16, bei dem die Dichtung eine gewebearmierte Flugwerkdichtung ist.

18. Verwendung einer Zusammensetzung nach einem beliebigen der Ansprüche1 bis 10 bei der Herstellung einer Flugzeugdichtung.

19. Verwendung nach Anspruch 18 bei der Herstellung einer Flugwerkdichtung.

20. Verwendung nach Anspruch 19 bei der Herstellung einer gewebearmierten Flugwerkdichtung.

## Revendications

1. Composition de caoutchouc en silicone thermodurcissable comprenant :
100 parties en poids d'une base d'élastomère de silicone HCR non durci qui présente, lorsqu'elle est déterminée à son état durci une résistance à la traction d'au moins 8 MPa (ISO 37 Type 2), une résistance à la déchirure d'au moins 18 N/MM (ISO 34-1 procédé C) et une gravité spécifique comprise entre 1,05 et 1,35 g/cc (ISO 2781) ;
0,5 à 30 parties en poids d'un matériau de remplissage de trous ;
0,1 à 3,0 parties en poids d'un agent de durcissement.

2. Composition selon la revendication 1, dans laquelle la base d'élastomère de silicone HCR présente, dans son état durci, une dureté (ISO 48 procédé N) comprise entre 30 et 80 IRHD, de préférence ne dépassant pas 70 IRHD, mieux encore de pas plus de 60 IRHD.

3. Composition selon la revendication 1 ou 2, dans laquelle la base d'élastomère de silicone HCR présente, dans son état durci, un allongement à la rupture d'au moins 500% (Pièces de test conformes ISO 37, Type 2).

4. Composition selon l'une quelconque des revendications précédentes, dans laquelle la base d'élastomère de silicone HCR est un siloxane de polydiméthyle ou de polydiméthylphényle contenant des groupes de réticulation constitué par des groupes hydroxyle, vinyle ou hexényle.

5. Composition selon l'une quelconque des revendications précédentes, dans laquelle le matériau de remplissage de trous est constitué de sphères creuses de verre et dans laquelle les sphères creuses de verre ont une gravité spécifique comprise entre 0,15 et 0,45.

6. Composition selon l'une quelconque des revendications précédentes dans laquelle l'agent de durcissement est un agent de durcissement de peroxyde organique sélectionné parmi le groupe constitué d'hexane de 2,5-diméthyle-2,5-di-(tert-butylperoxy), de peroxyde de di-tert-butyle, de peroxyde de 2,4-dichlorobenzoyle, de peroxyde de benzoyle, de peroxyde de dicumyle, de perbenzoate de tert-butyle, de carbonate de tert-butylperoxy et isopropyle ou d'une combinaison quelconque de ceux-ci.

7. Composition selon l'une quelconque des revendications précédentes, comprenant en outre jusqu'à 1.5 parties en poids d'un agent de couplage d'organosilane.

8. Composition selon l'une quelconque des revendications précédentes, comprenant en outre jusqu'à 3 parties en poids d'un modifiant de la résistance à la traction.

9. Composition selon l'une quelconque des revendications précédentes, comprenant en outre jusqu'à 5 parties en poids d'un additif de stabilisation thermique.

10. Composition selon l'une quelconque des revendications précédentes, comprenant en outre jusqu'à 10 parties en poids d'un ou de plusieurs additifs de traitement.

11. Procédé de préparation de la composition de silicone durcissable selon l'une quelconque des revendications 1 à 10, ledit procédé comprenant les étapes consistant à :
a) Ajouter l'élastomère de silicone HCR à une chambre de mélange et à mélanger l'élastomère jusqu'à ce que l'élastomère soit adéquatement homogénéisé ;
b) Éventuellement ajouter et mélanger un ou plusieurs additifs sélectionnés parmi le groupe constitué d'additifs de stabilisation thermique, d'agents de couplage de l'organosilane, de dispersions de pigments, de modifiants de la résistance à la traction et d'additifs de traitement à l'élastomère de silicone HCR dans la chambre de mélange ;
c) Ajouter et mélanger le matériau de remplissage de trous à l'élastomère de silicone HCR dans la chambre de mélange ;
d) Retirer le mélange de la chambre de mélange et combiner le mélange afin d'obtenir une composition homogène
dans lequel l'agent de durcissement est soit ajouté à l'élastomère de silicone HCR homogénéisé à l'étape b) soit ajouté au mélange durant la combinaison à l'étape d).

12. Procédé selon la revendication 11, dans lequel l'étape c) consiste à ajouter et à mélanger de 30 à 70% du matériau de remplissage de trous à l'élastomère de silicone HCR dans la chambre de mélange, en ajoutant et en combinant ensuite le volume restant des matériaux de remplissage de trous à l'élastomère de silicone dans la chambre de mélange.

13. Utilisation d'une composition selon l'une quelconque des revendications 1 à 10 dans la préparation d'un caoutchouc de silicone durci ayant une dureté comprise entre 40 et 80 IRHD, une résistance à la traction minimale comprise entre 4,0 et 7,0 Mpa, une résistance à la déchirure minimale comprise entre 10 et 12 kN/m² et une densité inférieure à 1 g/cc.

14. Utilisation d'une composition selon l'une quelconque des revendications 1 à 10 dans la préparation d'un caoutchouc de silicone durci ayant une dureté Shore A comprise entre 48 et 58, une résistance à la traction minimale de 1050 psi, une résistance à la déchirure de 140 livres/pouce et une densité inférieure à 1 g/cc.

15. Procédé de formation d'un joint d'étanchéité à base de caoutchouc de silicone, lequel procédé comprend les étapes consistant à :
a) Mouler la composition de caoutchouc de silicone durcissable selon l'une quelconque des revendications 1 à 10 afin de procurer la forme d'un joint d'étanchéité ; et
b) Chauffer la composition de manière à durcir la composition à un état élastomérique en vue de la formation du joint d'étanchéité en caoutchouc.

16. Procédé selon la revendication 15 dans lequel le joint d'étanchéité est un joint de cellule.

17. Procédé selon la revendication 16, dans lequel le joint d'étanchéité est un joint d'étanchéité de cellule à renfort de tissu.

18. Utilisation d'une composition selon l'une quelconque des revendications 1 à 10 dans la production d'un joint d'étanchéité de cellule d'aéronef.

19. Utilisation selon la revendication 18 dans la production d'un joint d'étanchéité d'aéronef.

20. Utilisation selon la revendication 19 dans la production d'un joint d'étanchéité de cellule à renfort de tissu.
